# EUROPÄISCHE PATENTSCHRIFT

(11) **EP 0 764 705 B1**
(45) Veröffentlichungstag und Bekanntmachung des Hinweises auf die Patenterteilung: **25.11.1998**
(21) Anmeldenummer: 95114728.9
(22) Anmeldetag: 19.09.1995
(51) Int. Cl.: C09J 7/02, G09F 3/10

(54) **Haftetikett mit thermosensitiver Beschichtung**
Adhesive label with thermosensitive coating
Etiquette autocollante à revêtement thermosensible

(43) Veröffentlichungstag der Anmeldung: 26.03.1997
(73) Patentinhaber: Witkovsky, Volker, 56589 Datzeroth (DE); Wehmann, Jörg, 56567 Neuwied (DE)
(72) Erfinder: Witkovsky, Volker, 56589 Datzeroth (DE); Wehmann, Jörg, 56567 Neuwied (DE)

(56) Entgegenhaltungen:
- EP-A- 0 637 618
- WO-A-93/22354
- DE-A- 4 126 230
- GB-A- 2 083 376
- DATABASE WPI Week 9228, 11. August 1992 Derwent Publications Ltd., London, GB; AN 92-313325 'Biodegradable pressure sensitive adhesive tape.' & JP-A-4 220 478 (OKAMOTO CO. LTD.)

## Beschreibung

Die Erfindung betrifft ein Haftetikett, bestehend aus einem Obermaterial mit einer thermosensitiven Beschichtung auf einer Seite und mit einer Beschichtung eines wasserlöslichen Haftklebstoffes auf der Gegenseite.

Bei einem zunehmenden Einsatz von Mehrweg-Behältnissen aller Art, wie z.B. Kunststoff- und Metallkästen sowie Glasbehälter, erlangen wasserlösliche Haftetiketten eine immer größere Bedeutung. So ist es z.B. beim Einsatz von Mehrweg-Behältnissen in der Lebensmittel- und in der fleischverarbeitenden Industrie erforderlich, daß sich als Informationsträger eingesetzte Thermoetiketten vom Behältnis während des automatisierten Waschprozesses rückstandsfrei ablösen lassen.

Es ist bekannt, daß Haftklebeetiketten mit thermosensitiver Beschichtung, im folgenden kurz als "Thermoetiketten" bezeichnet, ausgerüstet mit wasserunlöslichen, permanent haftenden, wasserablösbaren und wasserlöslichen Haftklebstoffen seit Jahren im Markt existieren. Diese Haftetiketten finden unter anderem Einsatz bei der Kennzeichnung von Mehrweg-Behältnissen.
Herkömmliche Thermoetiketten lassen sich nur teilweise oder nur in sehr langen Waschzyklen vom Behältnis ablösen. Aus ökonomischer wie auch ökologischer Sicht sind jedoch Waschzyklen von automatisierten Waschanlagen zeitlich begrenzt. Da Thermoetiketten vielfach auf unterschiedliche Stellen der Behältnisse appliziert werden, ist es nicht möglich, die Etiketten gezielt mit mechanischen Hilfsmitteln in der automatisierten Waschanlage zu entfernen.

Zur Herstellung herkömmlicher Thermoetiketten werden disperse Thermobeschichtungsmassen wie z.B. Thermolaktone eingesetzt. Diese wasserhaltigen Thermomassen können nur auf wasserunempfindlichen Rohpapieren eingesetzt werden. Dies hat zur Folge, daß das Dispergierverhalten der daraus gefertigten Thermoetiketten stark reduziert ist, und somit der Einsatz für das Etikettieren von Mehrweg-Behältnissen stark eingeschränkt wird.
Durch den Einsatz von thermobeschichtetem wasserabweisendem Papier zur Herstellung von Thermoetiketten ist ein Durchdringen des Wassers im Waschprozeß ohne mechanische Einwirkung stark eingeschränkt. Der eigentliche Ablöseprozeß solcher Thermoetiketten erfolgt im wesentlichen nur an den Schnittkanten und ist daher unbefriedigend sowie wegen fallweise erforderlicher manueller Nacharbeit wirtschaftlich nicht zu vertreten.

Ausgehend von diesem Stand der Technik liegt der Erfindung die Aufgabe zugrunde, ein Haftetikett mit thermosensitiver Beschichtung anzugeben, welches die vorgenannten Schwierigkeiten und technischen Grenzen überwindet und es ermöglicht, das Etikett bei einem mechanischen Waschprozeß mit üblichem Waschzyklus problemlos von einem Trägergegenstand abzulösen. Weiterhin soll das Haftetikett neben guter Dispergierbarkeit im Waschprozeß eine sehr gute Haftung unter anderem auf Kunststoff-, Metall-,Glas- und Papieroberflächen sowie auf feuchten Oberflächen und gute Bedruckbarkeit z.B. mittels eines Thermo-Druckverfahrens aufweisen.

Die Aufgabe wird bei einem Haftetikett der eingangs genannten Art mit der Erfindung dadurch gelöst, daß das Obermaterial wasserlöslich bzw. in Wasser dispergierbar und die thermosensitive Schicht wasserdurchlässig ist. Weitere Ausgestaltungen sind entsprechend den Unteransprüchen vorgesehen.

Die Erfindung wird nachfolgend anhand von Beispielen weiter erläutert :

### Beispiel 1

Eine wasserlösliche Polyvinylalkoholfolie, Flächengewicht 60 g/m², wird mit einer thermosensitiven Beschichtungsmasse, Masseantrag 5 g/m², beschichtet und diese unter Temperaturzuführung zu einem in der Oberfläche geschlossenen Film getrocknet. Die zweite, noch offene Seite der Polyvinylalkoholfolie wird mittels Transferverfahren mit einem wasserlöslichen Haftklebstoff beschichtet.

Die thermosensitive Oberfläche des so hergestellten, wasserlöslichen bzw. in Wasser dispergierbaren Haftetiketts wird nunmehr mittels eines Prägekalanders geprägt, so daß die thermosensitive Schicht mit durchgehenden Öffnungen versehen wird, die es ermöglichen, daß das Spülwasser bis zur eingesetzten Polyvinylalkoholfolie und wasserlöslichem Klebstoff vordringen kann, um den Ablöseprozeß zu beschleunigen.

### Beispiel 2

Ein in Wasser dispergiertes Haftetikettenobermaterial auf Basis von Carboxymethylcellulose bzw. Carboxypropylcellulose, Flächengewicht 60 g/m², wurde mittels einer Rasterwalze mit einem 30-er Raster, das entspricht 900 Rasterpunkte pro cm², und einer 70 %igen Flächendeckung mit einer thermosensitiven Beschichtungsmasse auf Basis von Eisenstearat beschichtet. Der Masseantrag der thermosensitiven Beschichtungsmasse betrug 6 g/m². Die Beschichtung mit dem wasserlöslichen Haftklebstoff erfolgte analog dem Beispiel 1.

Die nach den unter Beispiel 1 und 2 aufgeführten Verfahren hergestellten wasserlöslichen bzw. wasserdispergierbaren Haftetiketten wurden versuchsweise mit einem handelsüblichen Thermodruckverfahren bedruckt und die Druckqualität visuell beurteilt. Die Wasserlöslichkeit bzw. Abwaschbarkeit der unter Beispiel 1 und 2 gefertigten wasserlöslichen bzw. wasserdispergierbaren Haftetiketten wurde in einem praxisnahen Test im Labor, wie nachstehend beschrieben, durchgeführt.

In einem Behälter in den Maßen 160 x 160 x 160 mm aus transparentem Plexiglas wird ein rundes Behältnis aus Polyethylen, Durchmesser 70 mm, diagonal zu einer festinstallierten Brausevorrichtung, Durchmesser 40 mm, positioniert, so daß der Mindestabstand Spülvorrichtung/ vordere Substratoberfläche 100 mm beträgt. Das Spülsystem wird an die normale Haushaltswasserversorgung angeschlossen, die Temperierung des Waschwassers wird über eine Mischregeleinheit gesteuert, der Wasserdruck wird mittels eines Druckminderventils auf 3 bar reguliert.

Die unter Beispiel 1 und 2 hergestellten wasserlöslichen bzw. in Wasser dispergierbaren Haftetiketten wurden vergleichend zu einem herkömmlichen Thermolabel, ausgerüstet mit einem wasserlöslichen Haftklebestoff, bezüglich der Abwaschbarkeit nach dem beschriebenen Schema überprüft. Die Etikettengröße betrug 30 x 25 mm und wurde auf dem PE-Behältnis so plaziert, daß der Mittelpunkt des Etiketts dem der Sprühbrause entsprach. Die ermittelten Werte sind in der nachfolgenden Tabelle aufgeführt :

| | **Muster Beispiel 1** | **Muster Beispiel 2** | **Standard-Etikett** |
|---|---|---|---|
| **Waschtemperatur + 23 °C** | 2 min., 30 sec. rückstandsfrei abgelöst | 2 min. rückstandsfrei abgelöst | > 5 min. teilweise abgelöst |
| **Waschtemperatur + 50 °C** | 1 min., 40 sec. rückstandsfrei abgelöst | 1 min., 10 sec. rückstandsfrei abgelöst | > 5 min. teilweise abgelöst |
| **Druckqualität** | sehr gut | gut | sehr gut |

Anhand der durchgeführten Waschversuche kann festgestellt werden, daß die nach der Erfindung hergestellten Haftetiketten einen deutlichen Produktvorteil gegenüber bekannten Standardetiketten bieten und insbesondere bei Waschprozessen unter den üblichen kurzzeitigen Spülzeiten mechanischer Waschautomaten problemlos von den Trägergegenständen ablösbar sind.

## Patentansprüche

1. Haftetikett, bestehend aus einem Obermaterial mit einer thermosensitiven Beschichtung auf einer Seite und mit einer Beschichtung eines wasserlöslichen Haftklebestoffes auf der Gegenseite, dadurch gekennzeichnet, daß das Obermaterial wasserlöslich bzw. in Wasser dispergierbar und die thermosensitive Schicht mit durchgehenden Öffnungen wasserdurchlässig ausgebildet ist.

2. Haftetikett nach Anspruch 1, dadurch gekennzeichnet, daß das Obermateral Carboxymethylcellulose (CMC) oder Carboxypropylcellulose enthält.

3. Haftetikett nach Anspruch 1, dadurch gekennzeichnet, daß das Obermaterial Polyvinylalkohol enthält.

4. Haftetikett nach Anspruch 1, dadurch gekennzeichnet, daß das Obermaterial Gelatine enthält.

5. Haftetikett nach Anspruch 1, dadurch gekennzeichnet, daß das Obermaterial Alginate enthält.

6. Haftetikett nach einem oder mehreren der Ansprüche 1 bis 5, dadurch gekennzeichnet, daß die wasserlösliche Haftkleberschicht Polyacrylatklebstoff enthält.

7. Haftetikett nach einem oder mehreren der Ansprüche 1 bis 6, dadurch gekennzeichnet, daß die thermosensitive Schicht mit einer rasterförmigen oder streifenförmigen Beschichtung ausgebildet ist und daß die Öffnungen Poren sind.

8. Haftetikett nach einem oder mehreren der Ansprüche 1 bis 7, dadurch gekennzeichnet, daß die thermosensitive Schicht Eisenstearat oder Thermolakton enthält.

## Claims

1. Adhesive label comprising a stock material with a thermosensitive coating on one side and a coating with a water-soluble pressure sensitive adhesive on the other side, distinguished by a repulpable or dispersible stock material and a waterpermeable thermosensitive layer.

2. Label material according to point 1, distinguished by a stock material that contains carboxymethyl cellulose or carboxypropyl cellulose.

3. Adhesive label according to point 1, distinguished by a stock material that contains polyvinylalcohol.

4. Adhesive label according to point 1, distinguished by a stock material that contains gelatine.

5. Adhesive label according to point 1, distinguished by a stock material that contains alginates.

6. Adhesive label according to one or several of the rights 1-5, distinguished by a repulpable adhesive layer that contains a polyacrylate adhesive.

7. Adhesive label according to one or several of the rights 1-6, distinguished by a thermosensitive layer with a screened or striped coating and pore openings.

8. Adhesive label according to one or several of rights 1-7, distinguished by a thermosensitive layer that contains iron stearate or thermolacton.

## Revendications

1. Etiquette autocollante composée d'un support dont une face est pourvue d'une couche thermosensible et l'autre d'une masse adhésive soluble, caractérisée en ce que le support est soluble, c'est-à-dire dispersible dans l'eau, et que la couche thermosensible est perforée pour être perméable à l'eau.

2. Etiquette autocollante selon la revendication 1, caractérisée en ce que le support contient de la cellulose carboxyméthylique ou carboxypropylique.

3. Etiquette autocollante selon la revendication 1, caractérisée en ce que le support contient de l'alcool polyvinylique.

4. Etiquette autocollante selon la revendication 1, caractérisée en ce que le support contient de la gélatine.

5. Etiquette autocollante selon la revendication 1, caractérisée en ce que le support contient des alginates.

6. Etiquette autocollante selon l'une ou plusieurs des revendications 1 à 5, caractérisée en ce que la couche soluble adhésive contient de la colle polyacrylique.

7. Etiquette autocollante selon l'une ou plusieurs des revendications 1 à 6, caractérisée en ce que la couche thermosensible est pourvue d'un revêtement tramé ou en bande et que les ouvertures sont des pores.

8. Etiquette autocollante selon l'une ou plusieurs des revendications 1 à 7, caractérisée en ce que la couche thermosensible contient du stéarate de fer ou du thermolacton.
